# EUROPÄISCHE PATENTSCHRIFT

(11) **EP 0 694 551 B1**
(45) Veröffentlichungstag und Bekanntmachung des Hinweises auf die Patenterteilung: **05.01.2000**
(21) Anmeldenummer: 95107322.0
(22) Anmeldetag: 15.05.1995
(51) Int. Cl.: C07F 7/18, C08L 63/00, C08K 5/54, C03C 17/30, C04B 41/48, C14C 9/00, D06M 15/657, D06M 15/55, D21H 17/59, D21H 17/52

(54) **Selbstvernetzende wässrige Zubereitungen von Perfluoralkylgruppen enthaltenden Harzen**
Self-crosslinking aqueous compositions of resins containing perfluoroalkyl groups
Compositions aqueuses autoréticulantes de résines contenant des groupes perfluoroalkyles

(30) Priorität: 26.05.1994 DE 4418308
(43) Veröffentlichungstag der Anmeldung: 31.01.1996
(73) Patentinhaber: BAYER AG, 51368 Leverkusen (DE)
(72) Erfinder: Kirchmeyer, Stephan, Dr., D-51375 Leverkusen (DE); Pohmer, Klaus, Dr., D-51061 Köln (DE); Hassel, Tillmann, Dr., D-51061 Köln (DE)

(56) Entgegenhaltungen:
- EP-A- 0 125 826
- EP-A- 0 640 611
- GB-A- 2 218 097
- US-A- 3 297 519
- DATABASE WPI Week 8510, Derwent Publications Ltd., London, GB; AN 85-059894 & JP-A-60 017 197 (TOYO SHIGYO KK) 29. Januar 1985

## Beschreibung

Die vorliegende Erfindung betrifft selbstvernetzende Zubereitungen aus Wasser, Perfluoralkylgruppen enthaltenden Alkoxysilanverbindungen, Perfluoralkylgruppen enthaltenden, wasserlöslichen oder in Wasser emulgierbaren oder dispergierbaren Verbindungen und gegebenenfalls weiteren Bestandteilen, deren Herstellung und Verwendung.

Verbindungen mit Perfluoralkylgruppen weisen aufgrund ihrer Oberflächenspannung ausgeprägte Effekte bezüglich Wasser- und Schmutzabweisung auf. Bevorzugte Applikationform für Perfluoralkylgruppen tragende Verbindungen, Polymere oder Harze sind lösemittelfreie wäßrige Lösungen, Dispersionen oder Emulsionen. Die Herstellung von Perfluoralkylgruppen bzw. Perfluorpolyether aufweisenden, wäßrigen Polyurethanpolymeren durch Umsetzung von hydroxyfunktionellen Perfluoralkyl-Bausteinen, Isocyanaten und ionischen bzw. nichtionischen Bausteinen und der Aufbau von Perfluoralkylgruppen aufweisenden Polymeren auf Acrylat-Basis, welche entweder als wäßrige Dispersionen erzeugt werden oder leicht in wäßrige Dispersionen umzuwandeln sind, ist aus einer ganzen Reihe von Druckschriften bekannt (s. z.B. EP-A 491248, EP-A 533159, EP-A 552630, EP-A 572269, EP-A 560161, US 5039739).

Perfluoralkylalkoxysilane werden z.B. in US 2884433, EP-A 115943, DE-A 3913485 und WO 93/20084 beansprucht. Perfluoralkylalkoxysilane können als Behandlungs-, Schutz- und Imprägnierungsmittel für Gesteinsmaterialien, textile Materialien und Papier verwendet werden. Der Vorteil dieser Verbindungen besteht darin, daß sie als Monomere auf das Substrat aufgetragen werden können und somit ideale Voraussetzungen für eine gute Imprägnierwirkung und hohe Wirksamkeit auch in dünner Schicht aufweisen. Gleichzeitig vernetzen diese monomeren Verbindungen untereinander und mit dem Substrat, so daß nach dem Auftrag polymere Netzwerke erhalten werden, welche nicht mehr löslich sind und daher eine hohe Dauerwirkung aufweisen (US 4 983 459).

Die Applikation dieser Alkoxysilane muß jedoch aus lösungsmittelhaltigen Formulierungen erfolgen, da sie nicht mit Wasser verträglich sind und auch mit Hilfe üblicher Emulgatoren und Dispergierhilfsmittel nicht in stabile wäßrige Emulsionen oder Dispersionen überführt werden können. Zudem hydrolysieren Alkoxysilane im wäßrigen Medium zu den entsprechenden Silanolen, welche zu Polysiloxanen und schließlich zu Netzwerken kondensieren. Daher sind wäßrige Lösungen üblicher Alkoxysilane nur wenige Tage stabil. Wäßrige Dispersionen bzw. Emulsionen von Perfluoralkylgruppen tragenden Alkoxysilanen sind nicht bekannt. Für die technische Verwendung wäre eine wäßrige Applikationsform jedoch von großem Vorteil und äußerst wünschenswert. Insbesondere sind Zubereitungen von technischem Vorteil, welche einen hohen Fluorgehalt aufweisen, aus wäßrigem Medium applizierbar sind und zudem mit sich selbst und den zu schützenden Substraten vernetzen.

Aufgabe war es daher, Zubereitungen zur Verfügung zu stellen, die Perfluoralkylalkoxysilane enthalten und welche in Wasser löslich, emulgierbar oder dispergierbar sind.

Es wurde nun überraschenderweise gefunden, daß sich bestimmte Verbindungen aus Perfluoralkylgruppen aufweisenden Sulfonamiden, hydrophilen Polyethern und technisch gebräuchlichen Epoxidharzen, in hervorragender Weise als Emulgier-bzw. Dispergiermittel für Perfluoralkylgruppen tragende Alkoxysilane eignen. Die so hergestellten Emulsionen weisen eine hohe und unvorhersehbare Stabilität auf, welche mehrere Monate beträgt, vernetzen nach Wasserentzug zu einem polymeren Netzwerk, sind daher nicht mehr löslich und weisen eine hohe Dauerwirkung auf.

Gegenstand der Erfindung sind selbstvernetzende Zubereitungen enthaltend folgende Bestandteile:
a) Wasser
b) Perfluoralkylgruppen enthaltende Alkoxysilanverbindungen der allgemeinen Formel (I) 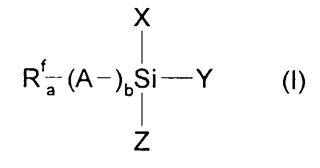 wobei
   - R^{f}: eine monovalente Perfluoralkylgruppe mit 4 bis 20 Kohlenstoffatomen bedeutet,
   - A: ein (a+1)-valenter aliphatischer, cycloaliphatischer, aromatischer, heterocyclischer oder gegebenenfalls mehrere dieser Eigenschaften aufweisender Rest mit 1 bis 20 Kohlenstoffatomen, der gegebenenfalls 1 bis 10 Sauerstoff-, Stickstoff- oder Schwefelatome enthalten kann
   - b: 1 oder 0
   - a: eine Zahl von 1 bis 4, falls b = 1 und 1, falls b = 0,
   - X, Y, Z: gleiche oder verschiedene, monovalente, gegebenenfalls durch ein bis zwei Sauerstoffatome unterbrochene Alkoxygruppen mit 1 bis 6 Kohlenstoffatomen, Cycloalkoxygruppen mit 6 bis 10 Kohlenstoffatomen, Aryloxygruppen mit 6 bis 10 Kohlenstoffatomen, Alkylgruppen mit 1 bis 6 Kohlenstoffatomen, Cycloalkylgruppen mit 6 bis 10 Kohlenstoffatomen oder gegebenenfalls substituierte Arylgruppen mit 6 bis 10 Kohlenstoffatomen bedeuten mit der Maßgabe, daß mindestens einer dieser Reste für eine Alkoxygruppe steht,
c) Perfluoralkylgruppen enthaltende, wasserlösliche oder in Wasser emulgierbare oder dispergierbare Verbindungen herstellbar aus
   c1) einem oder mehreren Perfluoralkylgruppen aufweisenden Sulfonamiden der allgemeinen Formel (II) 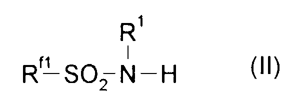 wobei
      - R^{f1}: die gleiche Bedeutung wie R^{f} in Formel (I) aber unabhängig davon besitzt,
      - R¹: Wasserstoff oder eine monovalente gegebenenfalls durch 1 bis 4 Sauerstoffatome unterbrochene Kohlenwasserstoffkette mit 1 bis 20 Kohlenstoffatomen bedeutet,
   c2) mindestens einer gegenüber 1,2-Epoxidgruppen reaktive Gruppen und Oxyethylen-Einheiten aufweisende Verbindung,
   c3) mindestens einer Verbindung mit 1,2-Epoxidgruppen und
   c4) gegebenenfalls weitere Verbindungen mit gegenüber 1,2-Epoxidgruppen reaktiven Gruppen
   mit der Maßgabe, daß die Verbindungen c) 5 bis 95 Gew.-% Oxyethylen-einheiten enthalten,
d) gegebenenfalls weiteren Bestandteilen.

Ein weiterer Gegenstand der Erfindung ist ein Verfahren zur Herstellung der erfindungsgemäßen selbstvernetzenden Zubereitungen, welches dadurch gekennzeichnet ist, daß mindestens eine Perfluoralkylgruppen enthaltende Alkoxysilanverbindung der allgemeinen Formel (I), mindestens eine Perfluoralkylgruppen enthaltende, wasserlösliche oder in Wasser emulgierbare oder dispergierbare Verbindung herstellbar aus einem oder mehreren Perfluoralkylgruppen aufweisenden Sulfonamid der allgemeinen Formel (II), mindestens einer gegenüber 1,2-Epoxidgruppen reaktive Gruppen und Oxyethylen-Einheiten aufweisenden Verbindung, mindestens einer 1,2-Epoxidgruppen enthaltenden Verbindung und gegebenenfalls weiteren Verbindungen mit gegenüber 1,2-Epoxidgruppen reaktiven Gruppen sowie gegebenenfalls weitere Bestandteile gemeinsam in Wasser gelöst, emulgiert oder dispergiert werden.

Besonders bevorzugt werden die Perfluoralkylgruppen enthaltenden Alkoxysilanverbindungen des Bestandteils b), die Perfluoralkylgruppen enthaltenden, wasserlöslichen oder in Wasser emulgierbaren oder dispergierbaren Verbindungen des Bestandteils c) und die gegebenenfalls im Bestandteil d) enthaltenden Perfluoralkylgruppen tragenden Verbindungen aus einem oder mehreren Perfluoralkylgruppen aufweisenden Sulfonamiden der allgemeinen Formel (II), mindestens einer Verbindung mit 1,2-Epoxidgruppen und gegebenenfalls weiteren Verbindungen mit gegenüber 1,2-Epoxidgruppen reaktiven Gruppen gemeinsam hergestellt und gemeinsam in Wasser gelöst, dispergiert oder emulgiert.

Die selbstvernetzenden Zubereitungen werden vorzugsweise als Behandlungs-, Schutz- und Imprägniermittel für Glas, Gesteinsmaterialien, textile Materialien, Leder und Papier verwendet.

Das Wasser ist in den erfindungsgemäßen, selbstvernetzenden Zubereitungen vorzugsweise in einer Menge von 95 bis 5 Gew.%, besonders bevorzugt in einer Menge 50 bis 10 Gew.%, bezogen auf die Gesamtmenge der selbstvernetzenden Zubereitung enthalten. Es besitzt die Aufgabe, als Applikationsmedium zu dienen, und die Viskosität der Aplikation anzupassen. Neben dieser Aufgabe bewirkt das Wasser in den meisten Fällen die Hydrolyse zumindest eines Teils der in den erfindungsgemäßen Zubereitungen enthaltenen Alkoxysilangruppen zu Silanolgruppen. In vielen Fällen ist es jedoch sinnvoll, die Konzentrationen der erfindungsgemäßen Zubereitungen vor ihrer Applikation weiter zu verringern, z.B. zwischen 0,5 und 0,05 Gew.% einzustellen. Diese Maßnahme dient z.B. dazu, die aufgetragene Fluormenge zu verringern oder die Viskosität der wäßrigen Applikationsform auf den jeweiligen Applikationszweck einzustellen. Es ist zudem möglich, die erfindungsmäßen Zubereitungen ohne Zusatz von Wasser herzustellen, zu lagern oder zu transportieren und erst direkt vor der Applikation auf eine dem jeweiligen Applikationszweck dienende Konzentration mit Wasser zu verdünnen. Der Vorgang des Verdünnens beinhaltet dann auch den in den meisten Fällen auftretenden Vorgang der Hydrolyse der Alkoxysilangruppen. Diese Vorgehensweise ist insbesondere von Vorteil, weil dadurch auf Lagerung und Transport von Wasser verzichtet werden kann. Bevorzugt ist das Wasser in den Zubereitungen bereits enthalten, da in vielen Fällen der erste Zusatz von Wasser das Vorhandensein bestimmter Apparaturen oder Laborgeräte voraussetzt, während die Verdünnung der bereits Wasser enthaltenden Zubereitungen einfach und ohne apparativen Aufwand durchgeführt werden kann.

Die als Komponente b) in den erfindungsgemäßen Zubereitungen enthaltenen Perfluoralkylgruppen enthaltenden Alkoxysilanverbindungen entsprechen der allgemeinen Formel (I) 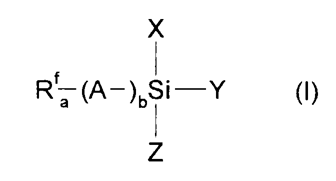 wobei
- R^{f}: eine monovalente Perfluoralkylgruppe mit 4 bis 20 Kohlenstoffatomen bedeutet,
- A: ein (a+1)-valenter aliphatischer, cycloaliphatischer, aromatischer, heterocyclischer oder gegebenenfalls mehrere dieser Eigenschaften aufweisender Rest mit 1 bis 20 Kohlenstoffatomen, der gegebenenfalls 1 bis 10 Sauerstoff, Stickstoff oder Schwefelatome enthalten kann
- b: 1 oder 0
- a: eine Zahl von 1 bis 4, falls b = 1, und 1, falls b = 0,
- X, Y, Z: gleiche oder verschiedene, monovalente, gegebenenfalls durch ein bis zwei Sauerstoffatome unterbrochene Alkoxygruppen mit 1 bis 6 Kohlenstoffatomen, Cycloalkoxygruppen mit 6 bis 10 Kohlenstoffatomen, Aryloxygruppen mit 6 bis 10 Kohlenstoffatomen, Alkylgruppen mit 1 bis 6 Kohlenstoffatomen, Cycloalkylgruppen mit 6 bis 10 Kohlenstoffatomen oder gegebenenfalls substituierte Arylgruppen mit 6 bis 10 Kohlenstoffatomen bedeuten mit der Maßgabe, daß mindestens einer dieser Reste für eine Alkoxygruppe steht.

Bei dem Rest R^{f} handelt es sich um eine monovalente Perfluoralkylgruppe mit 4 bis 20 Kohlenstoffatomen, z.B. geradkettige oder verzweigte Perfluorbutan-, Perfluorpentan-, Perfluorhexan-, Perfluorheptan-, Perfluoroctan-, Perfluornonan-, Perfluordecan- oder Perfluordodecangruppen, bevorzugt Perfluorbutan- und Perfluoroctangruppen. Die organische Reste X, Y, Z können gleich oder verschieden sein. Bevorzugt handelt es sich bei X, Y, Z um monovalente, gegebenenfalls durch ein bis 2 Sauerstoffatome unterbrochene Alkoxygruppen mit 1 bis 6 Kohlenstoffatomen wie z.B. Methoxy-, Ethoxy-, Propoxy-, Butoxy- oder Methoxyethoxygruppen, Cycloalkoxygruppen mit 6 bis 10 Kohlenstoffatomen wie z.B. Cyclohexyloxygruppen, Aryloxygruppen mit 6 bis 10 Kohlenstoffatomen, wie z.B. Phenoxygruppen, Alkylgruppen mit 1 bis 6 Kohlenstoffatomen wie z.B. Methyl-, Ethyl-, Propyl- oder Butylgruppen, Cycloalkylgruppen mit 6 bis 10 Kohlenstoffatomen wie z.B. Cyclopentyl-, Cyclohexyl- oder Methylcyclohexylgruppen, oder gegebenenfalls substituierte Arylgruppen mit 6 bis 10 Kohlenstoffatomen wie z.B. Phenyl- oder Toluylgruppen. Wichtig ist, daß es sich bei mindestens einem der Reste X, Y oder Z um eine Alkoxygruppe handelt.

Bevorzugt handelt es sich bei den Perfluoralkylalkoxysilanen um Verbindungen der allgemeinen Formel (III) 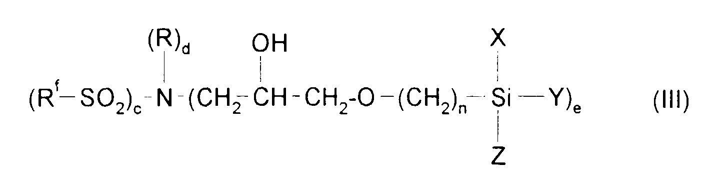 wobei
- R^{f}, X,Y und Z: die gleiche Bedeutung wie in Formel (I) besitzen,
- R: Wasserstoff oder eine monovalente gegebenenfalls durch 1 bis 4 Sauerstoffatome unterbrochene Kohlenwasserstoffkette mit 1 bis 20 Kohlenstoffatomen bedeutet, bevorzugt eine monovalente aliphatische Gruppe mit 1 bis 4 Kohlenstoffatomen,
- c: 1 oder 2, bevorzugt 1,
- d: 0 oder 1, bevorzugt 1,
- e: 3-a-b, jedoch mindestens 1, bevorzugt 1, und
- n: eine ganze Zahl zwischen 2 und 4, bevorzugt 3
bedeuten.

Bei der Gruppe R handelt es sich um eine monovalente Gruppe, vorzugsweise um eine monovalente aliphatische Gruppe mit 1 bis 4 Kohlenstoffatomen, z.B. Methyl-, Ethyl-, Propyl-, Butyl- oder 1-Methylethylgruppen, besonders bervorzugt um Methyl- oder Ethylgruppen.

Bevorzugte Perfluoralkylsulfonamidoalkoxysilane können z.B. dadurch hergestellt werden, daß 1 Mol einer Verbindung der allgemeinen Formel (II), mit 2 Molen für den Fall daß R¹ = H, ansonsten mit 1 Mol einer Verbindung der allgemeinen Formel (V) 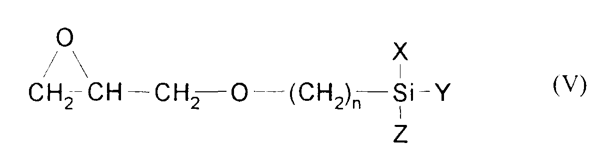 wobei X, Y, Z und n den angegebenen Bedeutungen entsprechen, bei Temperaturen von -20 bis 200°C, bevorzugt zwischen 60 und 150°C, besonders bevorzugt zwischen 80 und 120°C, umgesetzt wird.

Geeignete Perfluoralkylalkoxysilane sind z.B. Perfluorhexylsulfonyl-N-ethyl-N-triethoxysilylpropylamid, Perfluoroctylsulfonyl-N-trimethoxysilylpropylamid, Perfluoroctylsulfonyl-N-triethoxysilylpropylamid, Perfluoroctylsulfonyl-N-methyl-N-trimethoxysilylpropylamid, Perfluoroctylsulfonyl-N-methyl-N-triethoxysillpropylamid, Perfluoroctylsulfonyl-N-ethyl-N-trimethoxysilylpropylamid, Perfluoroctylsulfonyl-N-ethyl-N-triethoxysilylpropylamid, Perfluoroctylsulfonyl-N-propyl-N-trimethoxysilylpropylamid, Perfluoroctylsulfonyl-N-propyl-N-triethoxysilylpropylamid, (4-Perfluorhexylphenyl)methyldimethoxysilan, (4-Perfluorhexylphenyl)methyldiethoxysilan, (4-Perfluoroctylphenyl)trimethoxysilan, Perfluorheptylphenyltrimethoxysilan und Perfluorheptylphenyltriethoxysilan. Bevorzugte Perfluoralkylakoxyverbindungen sind z.B. 3-(N-Methyl-N-perfluoroctylsulfonamido)-2-hydroxypropoxypropyltrimethoxysilan, 3-(N-Ethyl-N-perfluoroctylsulfonamido)-2-hydroxypropoxypropyltrimethoxysilan, 3-(N-Propyl-N-perfluoroctylsulfonamido)-2-hydroxypropoxypropyltrimethoxysilan, 3-(N-Butyl-N-perfluoroctylsulfonamido)-2-hydroxypropoxypropyltrimethoxysilan, 3-(N-Methyl-N-perfluoroctylsulfonamido)-2-hydroxypropoxypropyltris(methoxyethoxy)silan, 3-(N-Ethyl-N-perfluoroctylsulfonamido)-2-hydroxypropoxypropyltris(methoxyethoxy)silan, 3-(N-Propyl-N-perfluoroctylsulfonamido)-2-hydroxypropoxypropyltris(methoxyethoxy)silan, 3-(N-Butyl-N-perfluoroctylsulfonamido)-2-hydroxypropoxypropyltris(methoxyethoxy)silan, 3-(N-Methyl-N-perfluorbutylsulfonamido)-2-hydroxypropoxypropyltrimethoxysilan, 3-(N-Ethyl-N-perfluorbutylsulfonamido)-2-hydroxypropoxypropyltrimethoxysilan, 3-(N-Methyl-N-perfluorbutylsulfonamido)-2-hydroxypropoxypropyltriethoxysilan, 3-(N-Ethyl-N-perfluorbutylsulfonamido)-2-hydroxypropoxypropyltriethoxysilan, 3-(N-Methyl-N-perfluorbutylsulfonamido)-2-hydroxypropoxypropyltris(methoxyethoxy)silan, 3-(N-Ethyl-N-perfluorbutylsulfonamido)-2-hydroxypropoxypropyltris(methoxyethoxy)silan, 3-(N-Propyl-N-perfluorbutylsulfonamido)-2-hydroxypropoxypropyltrimethoxysilan, 3-(N-Butyl-N-perfluorbutylsulfonamido)-2-hydroxypropoxypropyltrimethoxysilan oder der Gemische untereinander oder Gemische isomerer Verbindungen. Besonders bevorzugt sind die Verbindungen aus N-Alkyl-Perfluoralkylsulfonamid-Isomeren, wie sie in der technischen Herstellung durch Elektrofluorierung von Alkylsulfonsäuren und anschließende Umsetzung mit Alkylaminen anfallen, und Glycidylalkoxysilanen.

Die Perfluoralkylgruppen enthaltenden, wasserlöslichen oder in Wasser emulgierbaren oder dispergierbaren Verbindungen des Bestandteils c) sind herstellbar aus einem oder mehreren Perfluoralkylgruppen aufweisenden Sulfonamiden der allgemeinen Formel (II), einer Komponente, welche Oxyethylen-Einheiten enthält und gegenüber 1,2-Epoxiden reaktive Gruppen aufweist, einer Komponente, welche 1,2-Epoxidgruppen enthält und gegebenenfalls weiteren Komponenten, die gegenüber 1,2-Epoxiden reaktive Gruppen aufweisen. Die Menge der in der Verbindung vorhandenen Oxyethyleneinheiten beträgt 5 bis 95 Gew.-%.

Verbindungen c2) des Bestandteils c) der erfindungsgemäßen selbstvernetzenden Zubereitung sind mono-, di- und/oder polyfunktionelle Verbindungen, welche Oxyethyleneinheiten (-CH₂-CH₂-O-), berechnet mit einem Äquivalentgewicht von 44 g/Mol Oxyethyleneinheit, enthalten und weisen gegenüber 1,2-Epoxiden reaktive Gruppen auf. Solche Gruppen sind beispielsweise Carbonsäure- oder Amino- und weniger bevorzugt Thiol- oder Hydroxylgruppen. Insbesondere Hydroxylfunktionen reagieren mit 1,2-Epoxiden nur unter drastischen Bedingungen, d.h. unter Katalyse starker Basen und/oder hohen Temperaturen. Bevorzugt ist, Hydroxylfunktionen in Carboxylfunktionen zu überführen, welches durch Umsetzung der Hydroxylfunktionen mit Dicarbonsäuren oder deren reaktionsfähigen Derivaten wie z.B. Estern oder Anhydriden leicht möglich ist. Dadurch werden carboxyfunktionelle Verbindungen erhalten, welche leicht mit 1,2-Epoxidgruppen reagieren.

Als hydroxyfunktionelle Verbindungen werden z.B. mindestens eine, vorzugsweise zwei bis drei Hydroxylgruppen aufweisende Polyether der an sich bekannten Art verwendet. Diese werden durch Polymerisation von Epoxiden wie Ethylenoxid und zusätzlich Propylenoxid, Butylenoxid oder weiteren 1,2-Epoxiden, z.B. in Gegenwart von Lewis-Katalysatoren wie BF₃, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Butanol, Ethoxybutanol, Wasser, Alkohole, Ammoniak oder Amine, z.B. Ethylenglykol, Propylenglykol-(1,3) oder -(1,2), Glycerin, Sorbit, 4,4'-Dihydroxydiphenylpropan, Anilin, Ethanolamin oder Ethylendiamin hergestellt.

Zur Überführung der Hydroxylfunktionen in Carbonsäurefunktionen z.B. durch Veresterung werden die beschriebenen Polyether mit Dicarbonsäuren oder deren veresterungsfähigen Derivaten gegebenenfalls im Gemisch mit weiteren Mono-, Di- oder Polyalkoholen sowie gegebenenfalls Monocarbonsäuren in an sich bekannter Weise (vgl. z.B. Houben-Weyl, Methoden der Organischen Chemie, Stuttgart, 1963, Bd. 14/2, S. 1 -5, 21 - 23, 40 - 44; C. Martens, Alkyd-Resins, Reinhold Publ. Comp. 1961, Reinhold Plastics Appl. Ser., S. 51 - 59) so umgesetzt, daß ein Überschuß an unveresterten Säuregruppen verbleibt. Die Veresterung wird vorzugsweise bis auf Säurezahlen von 5 bis 200, besonders bevorzugt 30 - 100 mg KOH/g durchgeführt. Bevorzugt handelt es sich also um säuregruppenhaltige, Oxyethyleneinheiten aufweisende Polyester. Beispiele für gegebenenfalls während der Veresterung zuzusetzende weitere Alkohole sind Ethylenglykol, Propylenglykol-(1,2) und -(1,3), Butylenglykol-(1,4) und -(2,3), Hexandiol-(1,6), Octandiol-(1,8), Neopentylglykol, 1,4-Bis(hydroxymethyl)cyclohexan, 2-Methyl-1,3-propandiol, Glycerin, Trimethylolpropan, Diethylenglykol, Triethylenglykol, Triethylenglykol, Tetraethylenglykol und höhere Polyethylenglykole, Dipropylenglykol und höhere Polypropylenglykole sowie Dibutylenglykol und höhere Polybutylenglykole. Beispiele für Dicarbonsäuren und deren Derivate seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydro-phthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, Terephthalsäuredimethylester und Terephthalsäurebisglykolester.

Auch durch Vinylpolymerisation funktionalisierte Oxyethylengruppen enthaltende Verbindungen, z.B. mit Acrylsäure, Methacrylsäure, Maleinsäure, Fumarsäure oder Ithaconsäure gepfropfte oxyethylengruppenhaltige Verbindungen der vorgenannten Art sind als Komponente c2) geeignet. Ebenso sind Derivate zur Pfropfung geeignet, die anschließend in die Carbonsäuren umgewandelt werden können, wie z.B. Acrylsäureester, Methacrylsäureester oder Maleinsäureanhydrid.

Verwendet werden können ebenfalls aminoterminierte Polyether, welche Oxyethylengruppen enthalten, beispielsweise solche, die durch reduktive Aminierung der vorbeschriebenen oxyethylengruppenhaltigen Polyether erhältlich sind.

Wichtig ist, daß die Verbindungen der Komponente c2) Funktionalitäten aufweisen, die mit 1,2-Epoxiden reagieren können und daß die Oxyethylen-Einheiten in einer Menge vorhanden sind, so daß die Verbindungen c) einen Anteil von 5 bis 95 Gew.-% an Oxyethylen-Einheiten, bevorzugt von 20 bis 80 Gew.% an Oxyethylen-Einheiten aufweist.

Die Grundkörper der 1,2-Epoxidgruppen aufweisenden Verbindungen c3) haben 1 bis 45 C-Atome und stellen epoxidierbare Di- oder Polyphenole, Di- oder Polycarbonsäuren, Di- oder Polycarbonsäureanhydride, Di- oder Polyalkohole oder mindestens zweifach ungesättigte Verbindungen dar.

Es sind dies beispielsweise Diglycidylether zweiwertiger Phenole wie Brenzkatechin, Resorcin, Hydrochinon, 4,4'-Dihydroxydiphenyldimethylmethan, 4,4'-Dihydroxy-3,3'-dimethyl-diphenylpropan, 4,4'-Dihydroxydiphenylsulfon, Glycidylester zweiwertiger aromatischer, aliphatischer und cycloaliphatischer Carbonsäuren wie beispielsweise Phthalsäureanhydridbisglycidylether oder Adipinsäurebisglycidylether oder Glycidylether zweiwertiger aliphatischer Alkohole wie Butandiolbisglycidylether, Hexandiolbisglycidylether oder Polyoxyalkylenglykolbisglycidylether.

Beispiele von Verbindungen mit mehr als zwei Epoxidgruppen sind: Polyglycidylether polywertiger Phenole, beispielsweise von Novolaken (Umsetzungsprodukte von ein oder mehrwertigen Phenolen mit Aldehyden, insbesondere Formaldehyd, in Gegenwart saurer Katalysatoren), Tris-(4-hydroxyphenyl)methan oder 1,1,2,2-Tetra(4-hydroxyphenyl)ethan; Epoxid-Verbindungen auf der Basis von aromatischen Aminen und Epichlorhydrin, beispielsweise Tetraglycidylmethylendianilin, N-Diepoxypropyl-4-aminophenylglycidylether; Glycidylester mehrwertiger aromatischer, aliphatischer und cycloaliphatischer Carbonsäuren; Glycidylether mehrwertiger Alkohole, beispielsweise von Glycerin, Trimethylolpropan und Petaerythrit und weitere Glycidylverbindungen wie Trisglycidylisocyanurat.

Bevorzugt sind Glycidylether von zweiwertigen oder mehrwertigen Phenolen, besondersbevorzugt sind die Bisgylcidylether von 2,2(4,4'-Dihydroxyphenyl)propan und Polygylcidylether von Novolaken.

Als Verbindungen c4) kommen Verbindungen in Betracht, welche gegenüber 1,2-Epoxiden reaktive Gruppen aufweisen, also vorwiegend Verbindungen mit Carbonsäure- und Aminogruppen, weniger bevorzugt Thiol- und Hydroxylgruppen. Hydroxygruppen können jedoch auf die beschriebene Art und Weise in Carbonsäuregruppen überführt werden.

Die Verbindungen der Komponente c4) weisen bevorzugt mindestens eine primäre Aminogruppe, eine sekundäre Aminogruppe, eine Hydroxylgruppe oder eine Carbonsäuregruppe auf. Zudem können diese Komponenten anionische Gruppen wie neutralisierte Carboxylat-, Sulfonat- oder Phosphonatgruppen oder kationische Gruppen wie z.B. Ammoniumgruppen aufweisen, welche die Löslichkeit, Emulgierbar oder Dispergierbarkeit der erfindungsgemäßen Harze in Wasser verbessern können. Geeignete Verbindungen sind z.B. mit Alkali oder organischen Basen neutralisierte Hydroxymethyl-3-hydroxy-sulfonsäure, Dimethylolpropionsäure, Weinsäure, Glycin, Taurin, Methyltaurin und Aminoethylaminoethylsulfonsäure oder Amine wie N,N-Dimethyl-N(3-aminopropyl)amin und Bis(N,N-dimethylaminopropyl)amin.

Weiterhin sind als Verbindungen der Komponente c4) geeignet z.B. Dicarbonsäuren wie Bernsteinsäure, Adipinsäure, Korksäure, Azelainsäure, Sebacinsäure, Phthalsäure, Tetrahydrophthalsäure oder Hexahydrophthalsäure, Fettsäuren wie Kokosfettsäure, Laurinsäure, Myristinsäure, Palmitinsäure, Stearinsäure, Ölsäure, Linolsäure, Tallölfettsäuren, dimere oder trimere Fettsäuren und Fettamine wie Dodecylamin, Tetradecylamin, Hexadecylamin, Octadecylamin, N-Methyloctadecylamin.

Bevorzugt sind Perfluoralkylgruppen enthaltende, wasserlösliche, -emulgierbare oder -dispergierbare Verbindungen, welche 5 bis 95 Gew.-% Oxyethyleneinheiten, berechnet mit einem Äquivalentgewicht von 44 g/Mol Oxyethyleneinheit, 1,5 bis 60 Gew.-% Fluor und gegebenenfalls bis zu 200 Milliäquivalenten/g Verbindung an ionischen Gruppen enthalten. Besonders bevorzugt sind Perfluoralkylgruppen enthaltende, wasserlösliche, -emulgierbare oder -dispergierbare Verbindungen aus Perfluoralkylgruppen aufweisenden Sulfonamiden der allgemeinen Formel (II), säuregruppenhaltigen, polyoxyalkylenmodifizierten Polyestern und Verbindungen, welche 1,2-Epoxidgruppen enthalten.

Als weitere Bestandteile d) der erfindungsgemäßen Zubereitungen kommen bevorzugt in Frage: Hilfsmittel, welche der Koagulation der in Dispersion vorliegenden Polymerteilchen entgegenwirken und dadurch die Stabilität der Dispersion erhöhen können, Stoffe, welche die Filmbildung fördern, Stoffe, welche die Haftwirkung zu Substraten fördern oder Stoffe, welche die hydrophoben oder oleophoben Eigenschaften der erfindungsgemäßen Zubereitungen fördern.

Bei den Hilfsmitteln, welche der Koagulation der in Dispersion vorliegenden Polymerteilchen entgegenwirken und dadurch die Stabilität der Dispersion erhöhen können, handelt es sich im allgemeinen um sogenannte externe Emulgatoren, also um anionische, kationische oder neutrale niedermolekulare, oligomere oder polymere Emulgatoren, Tenside oder Schutzkolloide. Diese können in einer Menge von 0 bis 30 Gew.%, vorzugsweise 0 bis 10 Gew.% bezogen auf die Masse des Feststoffes der erfindungsgemäßen Zubereitungen enthalten sein.

Beispiele von anionischen niedermolekularen, oligomeren bzw. polymeren Emulgatoren oder Tensiden sind Alkali- oder Erdalkalisalze von Fettsäuren, z.B. Natriumsalze von gesättigten Fettsäuren mit 10 bis 21 Kohlenstoffatomen, Natriumsalze von ungesättigten Fettsäuren mit 12 bis 18 Kohlenstoffatomen, chlorosulfonierte und verseifte Paraffinöle, Alkylethersulfonate wie Ether von α-Sulfo-ω-hydroxy-polyethylenglykolen mit z.B. 1-Methylphenylethylphenol, Nonylphenol oder Alkylethern mit 12 bis 18 Kohlenstoffatomen, Arylalkylsulfonate wie beispielsweise mit geradkettigen oder verzweigten Butylgruppen versehene Naphthalinsulfonsäuren oder Alkylsulfate wie die Natriumsalze von langkettigen Schwefelsäurealkylestern.

Beispiele von kationischen niedermolekularen, oligomeren bzw. polymeren Emulgatoren oder Tensiden sind die Salze von langkettige Alkylreste tragenden Aminen mit 8 bis 22 Kohlenstoffatomen, die mit Säuren oder durch Alkylierung zu den Ammoniumverbindungen umgesetzt wurden, sowie analoge Phosphor- und Schwefelverbindungen.

Beispiele nichtionischer oligomerer bzw. polymerer Emulgatoren oder Tenside sind Alkylpolyglykolether oder -ester wie ethoxylierte gesättige oder ungesättigte Bindungen tragende langkettige Alkohole z.B. mit 12 bis 18 Kohlenstoffatomen, ethoxyliertes Rizinusöl, ethoxylierte (Kokos)fettsäuren, ethoxyliertes Sojabohnenöl, ethoxylierte Resin- oder Rosinsäuren, ethoxylierter und ggf. propoxylierter Butyldiglkykol oder ethoxylierte Alkylarylether wie ethoxyliertes geradkettiges und/oder verzweigtes Nonylphenol oder Octylphenol oder benzyliertes p-Hydroxybiphenyl.

Geeignet als Emulgatoren oder Tenside sind weiterhin ethoxylierte langkettige Alkyl- oder Alkenylamine, Lecithin, mit langkettigen Alkylisocyanaten modifizierte Verbindungen aus Polyethylenglykolen und Diisocyanaten, Umsetungsprodukte von Rapsöl und Diethanolamin oder ethoxylierte Verbindungen aus Sorbitan und langkettigen Alkan- oder Alkencarbonsäuren.

Geeignet als Schutzkolloide sind z.B. Polyvinylalkohole oder wasserlösliche Cellulosederivate wie Methylcellulose.

Filmbildende Stoffe sind im allgemeinen polymere Verbindungen, welche ein ausreichendes Molekulargewicht besitzen, daß sie die Filmbildung fördern, also im allgemeinen ein Molekulargewicht von über 10000 aufweisen. Sie können in den erfindungsgemäßen Zubereitungen in einer Menge von 0 bis 50 Gew.%, bezogen auf die Masse des Feststoffes der erfindungsgemäßen Zubereitungen enthalten sein. Es sind dies vorzugsweise Polyurethane, (gegebenenfalls epoxyfunktionelle) Polyester, Polyether, Polyvinylester, Polyvinylalkohole, Polyacrylate, Polyolefine oder Polymerisate, welche ihrerseits technisch gebräuchlich und dem Fachmann bekannt sind. Die filmbildenden Stoffe liegen in Wasser emulgierter, dispergierter oder gelöster Form vor oder können mit Hilfe einfacher Mittel, d.h. z.B. durch einfaches Einrühren von oder in Wasser in eine in Wasser emulgierte, dispergierte oder gelöste Form überführt werden. Ebenfalls sind als filmbildende Stoffe z.B. Orthokieselsäureester geeignet, welche beim Trocknen der erfindungsgemäßen Zubereitungen vernetzen.

Stoffe, welche die Haftwirkung zu Substraten fördern, sind im Bestandteil d) bevorzugt Verbindungen der allgemeinen Formel (IV) 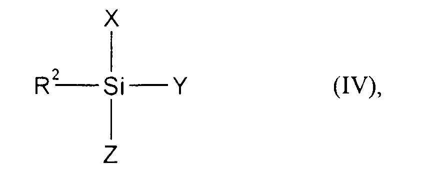 wobei
- X, Y und Z: die gleiche Bedeutung wie in den Formeln (I) und (III) haben und
- R²: eine monovalente, gegebenenfalls durch funktionelle Gruppen substituierte Alkyl-, Cycloalkyl-, Alkylaryl- oder Arylgruppe mit 1 bis 20 Kohlenstoffatomen bedeutet.

Besonders bevorzugt sind funktionelle Alkoxysilane, z.B. Vinyl-, (Meth)acryl-, 1,2-Epoxy-, Thiol-, Amino-, Harnstoff- oder Azidgruppen aufweisende Alkoxysilane, wie Vinyltrimethoxysilan, Vinyltriethoxysilan, Vinyltris(2-methoxyethoxysilan), 3-Methacryloxypropyltrimethoxysilan, beta-(3,4-Epoxycyclohexyl)ethyltrimethoxysilan, gamma-Glycidoxypropyltrimethoxysilan, gamma-Glycidoxypropyltris(2-methoxyethoxysilan), gamma-Mercaptopropyltrimethoxysilan, 3-Aminopropyltriethoxysilan, 3-Aminopropyltrimethoxysilan, N-2-(Aminoethyl)-3-aminopropyltrimethoxysilan, N-2-(Aminoethyl-N'-2'-aminoethyl)-3-aminopropyltrimethoxysilan, N,N-Di(3-propyltrimethoxysilan), 3-Ureidopropyltriethoxysilan, Cyclopentadienylpropyltriethoxysilan und 3-Azidopropyltriethoxysilan.

Stoffe, welche die hydrophoben oder oleophoben Eigenschaften der erfindungsgemäßen Zubereitungen fördern sind z.B. Fette, Wachse oder Öle auf der Basis von natürlichen oder mineralischen Fetten oder Alkylalkoxysilane wie Methyltrimethoxysilan, Octyltrimethoxysilan, Methyloctyldimethoxysilan, Hexadecyltrimethoxysilan, Octadecyltrimethoxysilan und Methyloctadecyldimethoxysilan. Ebenfalls geeignet sind die in EP-A 130 521 und EP-A 157 323 beschriebenen Siliconharze.

Die erfindungsgemäßen Zubereitungen können weiterhin Stoffe enthalten, welche den pH-Wert der wäßrigen Dispersionen, Lösungen oder Emulsionen auf einen bestimmten Wert einstellen, z.B. Säuren wie Essigsäure, Milchsäure, Zitronensäure oder Weinsäure, Basen wie Ammoniak, Amine oder Alkanolamine, Alkalihydroxide, Alkalihydrogencarbonate oder Alkalicarbonate und Salze wie Natriumacetat, Natriumhydrogenphosphat oder Natriumphosphat. Die erfindungsgemäßen Zubereitungen besitzen in Anwesenheit von Wasser vorzugsweise einen pH von 3 bis 9, besonders bevorzugt von 5 bis 8.

Die erfindungsgemäßen Zubereitungen können als weitere Bestandteile d) Verbindungen aus
i) einem oder mehreren Perfluoralkylgruppen aufweisenden Sulfonamiden der allgemeinen Formel (II) 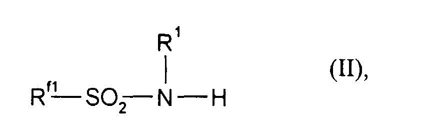 wobei
   - R^{f1}: die gleiche Bedeutung wie R^{f} in Formel (I) aber unabhängig davon besitzt,
   - R¹: Wasserstoff oder eine monovalente gegebenenfalls durch 1 bis 4 Sauerstoffatome unterbrochene Kohlenwasserstoffkette mit 1 bis 20 Kohlenstoffatomen bedeutet,
ii) mindestens einer Verbindung mit 1,2-Epoxidgruppen und
iii) gegebenenfalls weiteren Verbindungen mit gegenüber 1,2-Epoxidgruppen reaktiven Gruppen enthalten.

Die Ausgangsverbindungen für diese Verbindungen sind diejenigen, welche für die Verbindungen c) verwendet werden.

Die erfindungsgemäßen Zubereitungen können dadurch hergestellt werden, daß die einzelnen Bestandteile der Zubereitungen getrennt hergestellt, gemischt und zusammen oder gegebenenfalls in Stufen in Wasser gelöst, emulgiert oder dispergiert werden. Das Verfahren kann lösemittelfrei oder mit geringem Zusatz an Lösemitteln durchgeführt werden. Die Lösemittel können anschließend in der Zubereitung verbleiben oder aber durch geignete Verfahren, beispielsweise durch Destillation entfernt werden. Geeignete Lösemittel sind inerte Lösemittel wie Dimethylformamid, N-Methylpyrrolidon, Dimethylacetamid, Aceton, 2-Butanon, Tetrahydrofuran, Methyl-tert.butylether, Toluol, Choroform oder Dichlormethan.

In einer besonderen Variante werden die Perfluoralkylgruppen enthaltenden Alkoxysilanverbindungen im Bestandteil b), die Perfluoralkylgruppen enthaltenden, wasserlöslichen oder in Wasser emulgierbaren oder -dispergierbaren Verbindungen im Bestandteil c) und die gegebenenfalls im Bestandteil d) enthaltenen Perfluoralkylgruppen tragenden Verbindungen gemeinsam hergestellt und gemeinsam in Wasser gelöst, dispergiert oder emulgiert.

Die erfindungsgemäßen Zubereitungen können als Behandlungs-, Schutz- und Imprägniermittel für Glas, Gesteinsmaterialien, wie Mauerwerk, Beton, Kalksandstein, Putz, Mörtel, Marmor, Keramik, Ziegel und Natursteine, z.B. als Hydrophobierungs- oder Oleophobierungsmittel, zur Sanierung oder als Antigraffiti-Ausrüstung, als Behandlungsmittel für textile Materialien, Leder und Papier, z.B. zur Regenfestausrüstung oder Schmutzfestausrüstung von Kleidung, Tischwäsche und Markiesen, zur Pflege und schmutzabweisenden Ausrüstung von Teppichen, Teppichböden und textilen Fußbodenbelägen und zur Ausrüstung und Pflege von Ledergegenständen wie Schuhen, Handschuhen und Lederbekleidung verwendet werden.

Die vorliegende Erfindung soll anhand der nachfolgenden Ausführungsbeispiele näher erläutert werden.

### Beispiele

### Voraddukt 1:

In einem Dreihalskolben mit mechanischer Rührung und Innenthermometer werden 200 g eines Polyethylenglykols mit einem mittleren Molekulargewicht von 2000 g/Mol und 20 g Bernsteinsäureanhydrid bei einer Temperatur von 150°C gerührt, bis das Reaktionsprodukt eine Säurezahl von 51 mg KOH/g aufweist.

### Beispiel 1 (Herstellung einer erfindungsgemäßen Zubereitung durch Mischung der verschiedenen Bestandteile und gemeinsame Dispergierung)

In einem Dreihalskolben mit mechanischer Rührung und Innenthermometer werden bei 100°C 55 g Voraddukt 1, 40 g Bisphenol A-Bisglycidylether mit einem Epoxidäquivalentgewicht von 200 g/Mol Epoxid und 0,5 g Natriumcarbonat gerührt, bis keine Säurezahl mehr feststellbar ist. Man gibt 76,95 g Perfluoroctylsulfonsäure-N-methylamid hinzu und rührt 24 h bei 100°C.

Das Harz wird mit 78,05 g 3-(N-Methyl-N-perfluoroctylsulfonamido)-2-hydroxypropoxypropyltris(methoxyethoxy)silan gemischt in 500 ml Aceton gelöst. Man dispergiert durch Zugabe eines Gemisches aus 870 ml Wasser und 0,31 g Essigsäure und destilliert das Aceton bei ca. 35°C bis zu einem Druck von 16 mbar ab. Man erhält eine feinteilige Dispersion mit einem pH von 5,0, einer Viskosität von 90 mPa•s und einer Stabilität von >3 Monaten.

### Beispiel 2 (Herstellung einer erfindungsgemäßen Zubereitung durch gemeinsame Herstellung der verschiedenen Bestandteile und gemeinsame Dispergierung)

In einem Dreihalskolben mit mechanischer Rührung und Innenthermometer werden bei 100°C 22 g Voraddukt 1, 12 g Bisphenol A-Bisglycidylether mit einem Epoxidäquivalentgewicht von 200 g/Mol Epoxid und 0,2 g Natriumcarbonat gerührt bis keine Säurezahl mehr feststellbar ist. Man gibt 37,56 g Perfluoroctylsulfonsäure-N-methylamid und 7,84 g gamma-Glycidoxypropyltrimethoxysilan hinzu und rührt 24 Stunden bei 100°C nach. Anschließend werden 45,4 g Octyltrimethoxysilan hinzugegeben und 10 Minuten nachgerührt. Man löst das Gemisch in 250 ml Aceton, dispergiert durch Zugabe eines Gemisches aus 187,5 ml Wasser und 0,2 g Essigsäure und destilliert das Aceton bei ca. 35°C bis einem Druck von 16 mbar ab. Man erhält eine feinteilige Dispersion mit einem pH von 6,5, einer Viskosität von 80 mPa·s und einer Stabilität von >3 Monaten.

### Beispiel 3 (Verwendung)

Je 20 g Dispersion aus Beispiel 1 und 2 werden mit 480 g Wasser verdünnt. Stücke von Baumwollstoff werden mit Hilfe der verdünnten Dispersion imprägniert und anschließend bei 25°C und 1 h bei 110°C im Trockenschrank getrocknet. Anschließend werden Tropfen von Wasser und Paraffinöl auf das Gewebe gesetzt. Es wird die Zeit gemessen, welche die Tropfen zum Eindringen in das Gewebe benötigen.

| Imprägnierung mit der Dispersion aus | Zeit bis zum Benetzen des Gewebes | |
|---|---|---|
| | Wasser | Paraffin |
| Beispiel 1 | 5 Stunden | > 3 Tage |
| Beispiel 2 | 2 Stunden | > 3 Tage |
| nicht imprägniert | < 1 Minute | < 1 Minute |

### Beispiel 4 (Verwendung)

Je 20 g Dispersion aus Beispiel 1 und 2 werden mit 480 g Wasser verdünnt. Stücke unglasierter Keramik werden in die Verdünnungen 30 Sekunden getaucht und anschließend 24 h bei 25°C und 5 h bei 110°C getrocknet. Anschließend werden je ein Tropfen Wasser und ein Tropfen Paraffinöl auf die Keramik gesetzt. Es wird die Zeit gemessen, welche die Tropfen zum Eindringen in die Keramik benötigen.

| Imprägnierung mit der Dispersion aus | Eindringtiefe | Zeit bis zum Benetzen der Keramik | |
|---|---|---|---|
| | | Wasser | Paraffin |
| Beispiel 1 | ca. 0,5 mm | 4,5 Stunden | > 3 Tage |
| Beispiel 2 | ca. 1 mm | 6,0 Stunden | > 3 Tage |
| nicht imprägniert | - | < 1 Minute | < 1 Minute |

## Patentansprüche

1. Selbstvernetzende Zubereitung enthaltend folgende Bestandteile:
a) Wasser
b) Perfluoralkylgruppen enthaltende Alkoxysilanverbindungen der allgemeinen Formel (I) 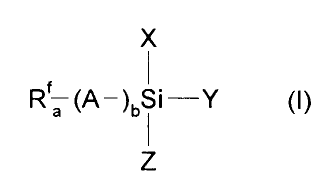 wobei
R^{f} eine monovalente Perfluoralkylgruppe mit 4 bis 20 Kohlenstoffatomen bedeutet,
A ein (a+1)-valenter aliphatischer, cycloaliphatischer, aromatischer, heterocyclischer oder gegebenenfalls mehrere dieser Eigenschaften aufweisender Rest mit 1 bis 20 Kohlenstoffatomen, der gegebenenfalls 1 bis 10 Sauerstoff-, Stickstoff- oder Schwefelatome enthalten kann
b 1 oder 0
a eine Zahl von 1 bis 4, falls b = 1, und 1, falls b = 0,
X, Y, Z gleiche oder verschiedene, monovalente, gegebenenfalls durch ein bis zwei Sauerstoffatome unterbrochene Alkoxygruppen mit 1 bis 6 Kohlenstoffatomen, Cycloalkoxygruppen mit 6 bis 10 Kohlenstoffatomen, Aryloxygruppen mit 6 bis 10 Kohlenstoffatomen, Alkylgruppen mit 1 bis 6 Kohlenstoffatomen, Cycloalkylgruppen mit 6 bis 10 Kohlenstoffatomen oder gegebenenfalls substituierte Arylgruppen mit 6 bis 10 Kohlenstoffatomen bedeuten mit der Maßgabe, daß mindestens einer dieser Reste für eine Alkoxygruppe steht,
c) Perfluoralkylgruppen enthaltende, wasserlösliche oder in Wasser emulgierbare oder dispergierbare Verbindungen herstellbar aus
c1) einem oder mehreren Perfluoralkylgruppen aufweisenden Sulfonamiden der allgemeinen Formel (II) 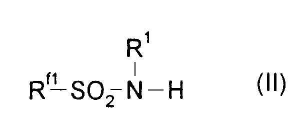 wobei
R^{f1} die gleiche Bedeutung wie R^{f} in Formel (I) aber unabhängig davon besitzt,
R¹ Wasserstoff oder eine monovalente gegebenenfalls durch 1 bis 4 Sauerstoffatome unterbrochene Kohlenwasserstoffkette mit 1 bis 20 Kohlenstoffatomen bedeutet,
c2) mindestens einer gegenüber 1,2-Epoxidgruppen reaktive Gruppen und Oxyethylen-Einheiten aufweisende Verbindung,
c3) mindestens einer Verbindung, welche 1,2-Epoxidgruppen enthält und
c4) gegebenenfalls weiteren Verbindungen mit gegenüber 1,2-Epoxidgruppen reaktiven Gruppen
mit der Maßgabe, daß die Verbindungen c) 5 bis 95 Gew.-% Oxyethyleneinheiten enthalten,
d) gegebenenfalls weiteren Bestandteilen.

2. Selbstvernetzende Zubereitung gemäß Anspruch 1, dadurch gekennzeichnet, daß der Bestandteil b) mindestens ein Perfluoralkylalkoxysilan der allgemeinen Formel (III) 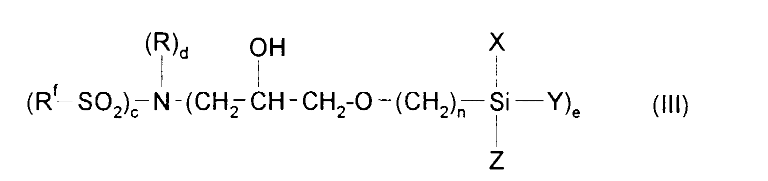 enthält, wobei
R^{f}, X, Y und Z die gleiche Bedeutung wie in Formel (I) besitzen,
R Wasserstoff oder eine monovalute, gegebenenfalls durch 1 bis 4 Sauerstoffatome unterbrochene Kohlenwasserstoffkette mit 1 bis 20 Kohlenstoffatomen bedeutet,
c 1 oder 2,
d 0 oder 1,
e 3-a-b, jedoch mindestens 1 und
n eine ganze Zahl zwischen 2 und 4
bedeuten.

3. Selbstvernetzende Zubereitung gemäß Anspruch 2, dadurch gekennzeichnet, daß in Formel (III)
R eine monovalente, aliphatische Gruppe mit 1 bis 4 Kohlenstoffatomen bedeutet,
X, Y, Z gleiche oder verschiedene, monovalente, gegebenenfalls durch ein bis zwei Sauerstoffatome unterbrochene Alkoxygruppen mit 1 bis 6 Kohlenstoffatomen, Cycloalkoxygruppen mit 6 bis 10 Kohlenstoffatomen, Aryloxygruppen mit 6 bis 10 Kohlenstoffatomen, Alkylgruppen mit 1 bis 6 Kohlenstoffatomen, Cycloalkylgruppen mit 6 bis 10 Kohlenstoffatomen oder gegebenenfalls substituierte Arylgruppen mit 6 bis 10 Kohlenstoffatomen bedeuten mit der Maßgabe, daß mindestens einer dieser Reste für eine Alkoxygruppe steht,
c 1,
d 1,
e 1 und
n 3
bedeuten.

4. Selbstvernetzende Zubereitung gemäß einem oder mehreren der Ansprüche 1 bis 3, dadurch gekennzeichnet, daß in der Zubereitung im Bestandteil d) Verbindungen der allgemeinen Formel (IV) 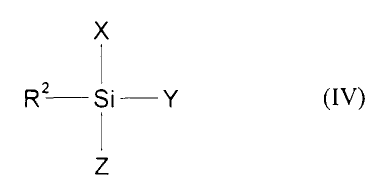 enthalten sind, wobei
X, Y und Z die gleiche Bedeutung wie in den Formeln (I) und (III) haben und
R² eine monovalente, gegebenenfalls durch funktionelle Gruppen substituierte Alkyl-, Cycloalkyl-, Alkylaryl- oder Arylgruppe mit 1 bis 20 Kohlenstoffatomen bedeutet.

5. Selbstvernetzende Zubereitung gemäß einem oder mehreren der Ansprüche 1 bis 4, dadurch gekennzeichnet, daß in der Zubereitung im Bestandteil d) Verbindungen enthalten sind, die herstellbar sind aus
i) einem oder mehreren Perfluoralkylgruppen aufweisenden Sulfonamiden der allgemeinen Formel (II) 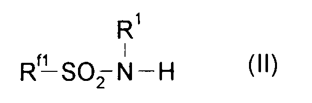 wobei
R^{f1} die gleiche Bedeutung wie R^{f} in Formel (I) aber unabhängig davon besitzt,
R¹ Wasserstoff oder eine monovalente gegebenenfalls durch 1 bis 4 Sauerstoffatome unterbrochene Kohlenwasserstoffketten mit 1 bis 20 Kohlenstoffatomen bedeutet,
ii) mindestens einer Verbindung, welche 1,2-Epoxidgruppen enthält und
iii) gegebenenfalls weitere Verbindungen mit gegenüber 1,2-Epoxidgruppen reaktiven Gruppen.

6. Selbstvernetzende Zubereitung gemäß einem oder mehreren der Ansprüche 1 bis 5, dadurch gekennzeichnet, daß es sich bei den Verbindungen c2) des Bestandteils c) um säuregruppenhaltige, Oxyethyleneinheiten aufweisende Polyester handelt.

7. Verfahren zur Herstellung der selbstvernetzenden Zubereitungen gemäß Anspruch 1 bis 6, dadurch gekennzeichnet, daß mindestens eine Perfluoralkylgruppen enthaltende Alkoxysilanverbindung der allgemeinen Formel (I), mindestens eine Perfluoralkylgruppen enthaltende, wasserlösliche oder in Wasser emulgierbare oder dispergierbare Verbindung herstellbar aus einem oder mehreren Perfluoralkylgruppen aufweisenden Sulfonamid der allgemeinen Formel (II), mindestens einer gegenüber 1,2-Epoxidgruppen reaktive Gruppen und Oxyethylen-Einheiten aufweisenden Verbindung, einer 1,2-Epoxidgruppen enthaltenden Verbindung und gegebenenfalls weiteren Verbindungen mit gegenüber 1,2-Epoxidgruppen reaktiven Gruppen sowie gegebenenfalls weitere Bestandteile gemeinsam in Wasser gelöst, emulgiert oder dispergiert werden.

8. Verfahren zur Herstellung der selbstvernetzenden Zubereitungen gemäß Anspruch 7, dadurch gekennzeichnet, daß die Perfluoralkylgruppen enthaltenden Alkoxysilanverbindungen des Bestandteils b), die Perfluoralkylgruppen enthaltenden, wasserlöslichen oder in Wasser emulgierbaren oder dispergierbaren Verbindungen des Bestandteils c) und die gegebenenfalls im Bestandteil d) enthaltenen Perfluoralkylgruppen tragenden Verbindungen aus einem oder mehreren Perfluoralkylgruppen aufweisenden Sulfonamiden der allgemeinen Formel (II), mindestens einer Verbindung mit 1,2-Epoxidgruppen und gegebenenfalls weiteren Verbindungen mit gegenüber 1,2-Epoxidgruppen reaktiven Gruppen gemeinsam hergestellt und gemeinsam in Wasser gelöst, dispergiert oder emulgiert werden.

9. Verwendung der selbstvernetzenden Zubereitungen gemäß Anspruch 1 bis 6 als Behandlungs-, Schutz- und Imprägniermittel für Glas, Gesteinsmaterialien, textile Materialien, Leder und Papier.

## Claims

1. Self-crosslinking composition comprising the following constituents:
a) water
b) alkoxysilane compounds containing perfluoroalkyl groups and having the general formula (I) 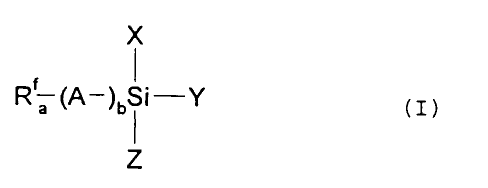 in which
R^{f} represents a monovalent perfluoroalkyl group having from 4 to 20 carbon atoms,
A represents an (a+1)-valent aliphatic, cycloaliphatic, aromatic or heterocyclic radical, or a radical which may, if desired, have more than one of these properties, having from 1 to 20 carbon atoms and, if desired, containing from 1 to 10 oxygen, nitrogen or sulphur atoms
b represents 1 or 0
a represents a number from 1 to 4, if b = 1, and represents 1 if b = 0,
X, Y and Z are identical or different, monovalent, if desired one- or two-oxygen-atom-bridged alkoxy groups having from 1 to 6 carbon atoms, cycloalkoxy groups having from 6 to 10 carbon atoms, aryloxy groups having from 6 to 10 carbon atoms, alkyl groups having from 1 to 6 carbon atoms, cycloalkyl groups having from 6 to 10 carbon atoms or unsubstituted or substituted aryl groups having from 6 to 10 carbon atoms, with the proviso that at least one of these radicals represents an alkoxy group,
c) Compounds dispersible or emulsifiable in water or soluble in water which contain perfluoroalkyl groups and can be prepared from
c1) one or more sulphonamides having perfluoroalkyl groups and the general formula (II) 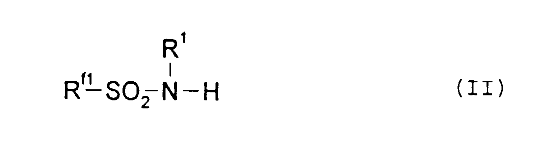 in which
R^{f1} has the same meaning as R^{f} in formula (I) but independently thereof,
R¹ represents hydrogen or a monovalent, if desired 1- to 4-oxygen-atom-bridged hydrocarbon chain having from 1 to 20 carbon atoms,
c2) at least one compound having oxyethylene units and groups reactive to 1,2-epoxide groups,
c3) at least one compound which contains 1,2-epoxide groups and
c4) if desired, other compounds having groups reactive to 1,2-epoxide groups
with the proviso that the compounds c) contain from 5 to 95% by weight of oxyethylene units,
d) if desired, other constituents.

2. Self-crosslinking composition according to Claim 1, characterized in that the constituent b) comprises at least one perfluoroalkylalkoxysilane of the general formula (III) 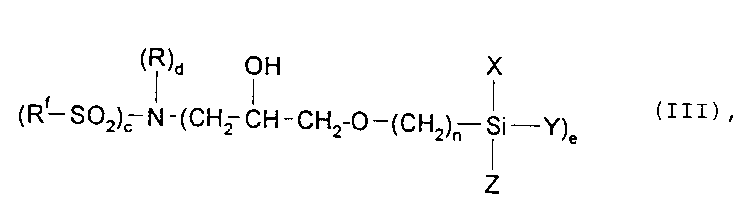 in which
R^{f}, X, Y and Z have the same meaning as in formula (I),
R represents hydrogen or a monovalent, if desired 1- to 4-oxygen-atom-bridged hydrocarbon chain having from 1 to 20 carbon atoms,
c represents 1 or 2,
d represents 0 or 1,
e represents 3-a-b, but at least 1 and
n represents an integer from 2 to 4.

3. Self-crosslinking composition according to Claim 2, characterized in that, in formula (III)
R represents a monovalent, aliphatic group having from 1 to 4 carbon atoms,
X, Y and Z represent identical or different, monovalent, if desired 1- to 2-oxygen-atom-bridged alkoxy groups having from 1 to 6 carbon atoms, cycloalkoxy groups having from 6 to 10 carbon atoms, aryloxy groups having from 6 to 10 carbon atoms, alkyl groups having from 1 to 6 carbon atoms, cycloalkyl groups having from 6 to 10 carbon atoms or unsubstituted or substituted aryl groups having from 6 to 10 carbon atoms, with the proviso that at least one of these radicals represents an alkoxy group,
c represents 1,
d represents 1,
e represents 1, and
n represents 3.

4. Self-crosslinking composition according to one or more of Claims 1 to 3, characterized in that, in constituent d) of the composition, compounds of the general formula (IV) 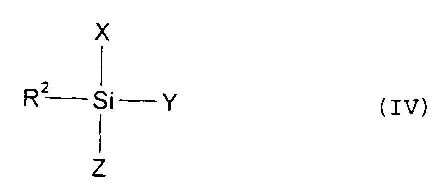 are present, in which
X, Y and Z have the same meaning as in the formulae (I) and (III), and
R² represents a monovalent alkyl, cycloalkyl, alkylaryl or aryl group having from 1 to 20 carbon atoms and, if desired, substituted with functional groups.

5. Self-crosslinking composition according to one or more of Claims 1 to 4, characterized in that, in constituent d) of the composition, compounds are present which can be prepared from
i) one or more sulphonamides having perfluoroalkyl groups and the general formula (II) 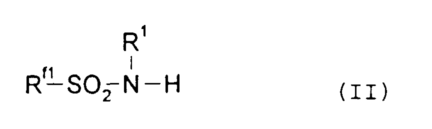 in which
R^{f1} has the same meaning as R^{f} in formula (I) but independently thereof,
R¹ represents hydrogen or a monovalent, if desired 1- to 4-oxygen-atom-bridged hydrocarbon chain having from 1 to 20 carbon atoms,
ii) at least one compound which contains 1,2-epoxide groups, and
iii) if desired, other compounds having groups reactive to 1,2-epoxide groups.

6. Self-crosslinking composition according to one or more of Claims 1 to 5, characterized in that compounds c2) of constituent c) are polyesters having oxyethylene units and containing acid groups.

7. Process for preparing the self-crosslinking compositions according to Claims 1 to 6, characterized in that at least one alkoxysilane compound containing perfluoroalkyl groups and having the general formula (I) , at least one compound which contains perfluoroalkyl groups and is dispersible or emulsifiable in water or soluble in water and can be prepared from one or more sulphonamides having perfluoroalkyl groups and the general formula (II) and from at least one compound having oxyethylene units and groups reactive to 1,2-epoxide groups and from a compound containing 1,2-epoxide groups and, if desired, from other compounds having groups reactive to 1,2-epoxide groups are dissolved, emulsified or dispersed together in water, if desired with other constituents.

8. Process for preparing the self-crosslinking compositions according to Claim 7, characterized in that the alkoxysilane compounds of constituent b) which contain perfluoroalkyl groups, the compounds of constituent c) which contain perfluoroalkyl groups and are dispersible or emulsifiable in water or soluble in water and the compounds having perfluoroalkyl groups which may, if desired, be present in constituent d), made from one or more sulphonamides having perfluoroalkyl groups and the general formula (II) and from at least one compound having 1,2-epoxide groups and, if desired, from other compounds having groups reactive to 1,2-epoxide groups are prepared together and together are dissolved, dispersed or emulsified in water.

9. Use of the self-crosslinking compositions according to Claims 1 to 6 as agents for treating, protecting or impregnating glass, stone materials, textile materials, leather or paper.

## Revendications

1. Composition autoréticulante contenant les composants suivants :
a) de l'eau
b) des alcoxysilanes à groupes perfluoralkyle de formule générale (I) 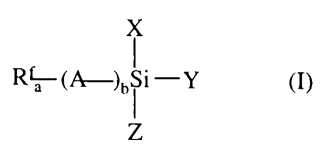 dans laquelle
R^{f} représente un groupe monovalent perfluoralkyle en C₄-C₂₀,
A représente un radical aliphatiquc, cycloaliphatique, aromatique, hétérocyclique ou éventuellement mélangé de ces divers types, en C₁-C₂₀, de la valence a+1, qui peut contenir le cas échéant 1 à 10 atomes d'oxygène, d'azote ou de soufre,
b est égal à 1 ou 0
a est un nombre qui va de 1 à 4 lorsque b=1 et qui est égal à 1 lorsque b=0,
X, Y, Z, ayant des significations identiques ou différentes, représentent chacun un groupe monovalent, éventuellement interrompu par 1 à 2 atomes d'oxygène, alcoxy en C₁-C₆, cycloalcoxy en C₆-C₁₀, aryloxy en C₆-C₁₀, alkyle en C₁-C₆, cycloalkyle en C₆-C₁₀ ou aryle éventuellement substitué en C₆-C₁₀, sous réserve que l'un au moins de ces symboles représente un groupe alcoxy,
c) des composés à groupes perfluoralkyle solubles, émulsionnables ou dispersables dans l'eau, préparés à partir de
c1) un ou plusieurs sulfonamides à groupes perfluoralkyle de formule générale (II) 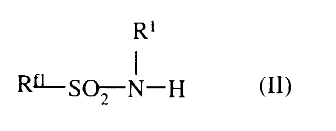 dans laquelle
R^{f1} a les significations indiquées pour R^{f} dans la formule (I) mais indépendamment de celui-ci,
R¹ représente l'hydrogène ou une chaîne hydrocarbonée monovalente en C₁-C₂₀ éventuellement interrompue par 1 à 4 atomes d'oxygène,
c2) au moins un composé à groupes réactifs à l'égard des groupes 1,2-époxyde et à motifs oxyéthylène,
c3) au moins un composé qui contient des groupes 1,2-époxyde et
c4) le cas échéant d'autres composés à groupes réactifs avec les groupes 1,2-époxyde,
sous réserve que les composés c) contiennent de 5 à 95 % en poids de motifs oxyéthylène,
d) le cas échéant d'autres composants.

2. Composition autoréticulante selon la revendication 1, caractérisée en ce que le composant b) contient au moins un perfluoralkylalcoxysilane de formule générale (III) 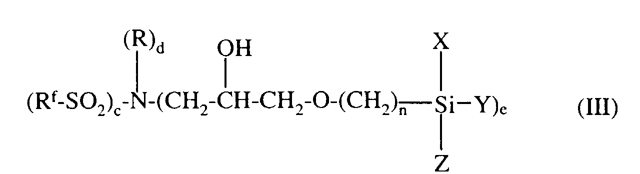 dans laquelle
R^{f}, X, Y et Z ont les significations indiquées en référence à la formule (I),
R représente l'hydrogène ou une chaîne hydrocarbonée monovalente en C₁-C₂₀, éventuellement interrompue par 1 à 4 atomes d'oxygène,
c est égal à 1 ou 2,
d est égal à 0 ou 1,
e est égal à 3-a-b mais au moins à 1 et
n est un nombre entier allant de 2 à 4.

3. Composition autoréticulante selon la revendication 2, caractérisée en ce que, dans la formule (III),
R représente un groupe aliphatique monovalent en C₁-C₄,
X, Y, Z, ayant des significations identiques ou différentes, représentent chacun un groupe monovalent, éventuellement interrompu par 1 à 2 atomes d'oxygène, alcoxy en C₁-C₆, cycloalcoxy en C₆-C₁₀, aryloxy en C₆-C₁₀, alkyle en C₁-C₆, cycloalkyle en C₆-C₁₀ ou aryle éventuellement substitué en C₆-C₁₀, sous réserve que l'un au moins de ces symboles représente un groupe alcoxy,
c est égal à 1,
d est égal à 1,
e est égal à 1 et
n est égal à 3.

4. Composition autoréticulante selon une ou plusieurs des revendications 1 à 3, caractérisée en ce que, dans le composant d) de la composition, il y a des composés de formule générale (IV) 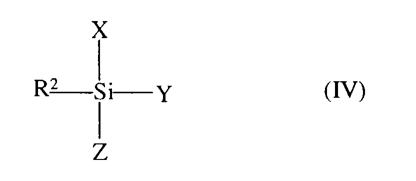 dans laquelle
X, Y et Z ont les significations indiquées en référence aux formules (I) et (III) et
R² représente un groupe monovalent alkyle, cycloalkyle, alkylaryle ou aryle en C₁-C₂₀ éventuellement substitué par des groupes fonctionnels.

5. Composition autoréticulante selon une ou plusieurs des revendications 1 à 4, caractérisée en ce que le composant d) de la composition contient des composés préparés à partir de
i) un ou plusieurs sulfonamides à groupes perfluoralkyle de formule générale (II) 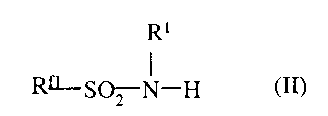 dans laquelle
R^{f1} a les significations indiquées pour R^{f} en référence à la formule (I), mais indépendamment de celui-ci,
R¹ représente l'hydrogène ou une chaîne hydrocarbonée monovalente en C₁-C₂₀, éventuellement interrompue par 1 à 4 atomes d'oxygène,
ii) au moins un composé qui contient des groupes 1,2-époxyde et
iii) éventuellement d'autres composés à groupes réactifs avec les groupes 1,2-époxyde.

6. Composition autoréticulante selon une ou plusieurs des revendications 1 à 5, caractérisée en ce que les composés c2) du composant c) sont des polyesters à groupes acides et à motifs oxyéthylène.

7. Procédé de préparation des compositions autoréticulantes selon les revendications 1 à 6, caractérisé en ce que l'on dissout, on émulsionne ou on disperse ensemble dans l'eau au moins un alcoxysilane à groupes perfluoralkyle de formule générale (I), au moins un composé à groupes perfluoralkyle soluble, émulsionnable ou dispersable dans l'eau, préparé à partir d'un ou plusieurs sulfonamides à groupes perfluoralkyle de formule générale (II), d'au moins un composé à groupes réactifs avec les groupes 1,2-époxyde et à motifs oxyéthylène, d'un composé contenant des groupes 1,2-époxyde et le cas échéant d'autres composés à groupes réactifs avec les groupes 1,2-époxyde et le cas échéant d'autres constituants.

8. Procédé de préparation des compositions autoréticulantes selon la revendication 7, caractérisé en ce que l'on prépare ensemble et on dissout, disperse ou émulsionne dans l'eau ensemble les alcoxysilanes à groupes perfluoralkyle du composant b), les composés à groupes perfluoralkyle solubles, émulsionnables ou dispersables dans l'eau du composant c) et les composés à groupes perfluoralkyle obtenus à partir d'un ou plusieurs sulfonamides à groupes perfluoralkyle de formule générale (II), d'au moins un composé à groupes 1,2-époxyde et le cas échéant d'autres composés à groupes réactifs avec les groupes 1,2-époxyde, éventuellement présents dans le composant d).

9. Utilisation des compositions autoréticulantes selon les revendications 1 à 6 en tant que produits pour le traitement, la protection et l'imprégnation du verre, des matériaux minéraux, des matières textiles, du cuir et du papier.
